# EUROPEAN PATENT SPECIFICATION

(11) **EP 2 751 484 B1**
(45) Date of publication and mention of the grant of the patent: **29.11.2017**
(21) Application number: 12766124.7
(22) Date of filing: 17.08.2012
(51) Int. Cl.: F23C 7/00, F23D 1/00, F23K 3/02, F23L 7/00, F23C 9/00

(54) **COMBUSTION APPARATUS WITH INDIRECT FIRING SYSTEM**
VERBRENNUNGSVORRICHTUNG MIT EINER INDIREKTEN Feuerung
APPAREIL DE COMBUSTION AVEC COMBUSTION INDIRECTE

(30) Priority: 30.08.2011 GB 201114894
(43) Date of publication of application: 09.07.2014
(73) Proprietor: Doosan Babcock Limited, Crawley, Sussex RH10 9AD (GB)
(72) Inventor: STURGEON, David William, Renfrew Strathclyde PA4 8DJ (GB); HESSELMANN, Gerard John, Crawley Sussex RH10 1UX (GB)
(74) Representative: Murgitroyd & Company
(86) International application number: PCT/GB2012/052011
(87) International publication number: WO 2013/030533

(56) References cited:
- WO-A1-97/47923
- WO-A1-2011/010161
- DE-A1- 19 521 505
- DE-A1-102009 016 191
- US-A- 4 387 654
- US-A1- 2009 000 532

## Description

The present invention relates to a combustion apparatus, in particular to a burner for the combustion of carbonaceous fuel. In the preferred case the invention relates to a burner for particulate solid carbonaceous fuel having an indirect firing system and is for example an indirect fired pulverous coal fired burner. In particular, but not exclusively, the invention relates to a combustion apparatus capable of air and oxyfuel firing and utilizing flue gas recirculation. For example the invention relates to a burner for use in a power generation apparatus and to a power generation apparatus including one or more such burners.

In the field of power generation from fossil fuels, and in particular from coal, conventional plant generally operate a direct firing system, where raw coal is fed from a bunker to the mill and pulverized and then the pulverized coal is conveyed directly from the mill to the burner. However, with the development of technologies, such as coal pre drying, and particularly lignite pre drying, it is becoming more common that plant operate an indirect firing system, where the raw coal is milled to a bunker and then the dried pulverized coal fed from the bunker to the burner. This allows for conveying of the coal at a higher solid to gas mass ratio than conventionally used in direct fired systems. Conventionally and hereafter this is referred to as "dense phase" conveying of the pulverized fuel.

There is significant prior experience relating to the efficient combustion of solid fuels for steam raising applications. There has been a strong drive in recent years to reduce levels of emissions of oxides of nitrogen from carbonaceous fuel burners, especially in the field of power generation. Low NOx burners have been developed which reduce the formation of NOx combustion gases.

In general terms, a low NOx burner for coal firing may comprise a number of components, which may include:
- a pipe to supply the pulverized fuel and the conveying air (often known as "primary" air)
- a number of channels arranged concentrically around the pulverized fuel supply, through which the burner combustion air is supplied; in a low NOx burner there will typically be two or more channels for the combustion air, these are often known as "secondary" air, "tertiary" air, etc.
- devices to induce a swirling motion in the combustion air may be placed in the secondary and tertiary (etc.) channels, these devices may (optionally) be adjustable
- devices to stabilise the flame, often placed on the end of the fuel supply pipe and sometimes known as the "flame-holder"
- devices placed inside the fuel supply pipe to control the fuel distribution at the outlet of that pipe
- supplementary equipment, such as igniters, light-up burners, flame monitoring sensors, etc., optionally installed in a separate tube, which may be located centrally within the fuel pipe where it is known as the "core" air tube; the core air tube may have its own air supply; alternatively supplementary equipment may be installed in other locations in the burner or close by.

Where "air" is used herein the skilled person will readily appreciate that other oxygen containing comburant gases may be substituted in the familiar way for example for oxyfuel firing including a comburant gas having a reduced nitrogen content relative to air, for example comprising mixtures of pure oxygen and/ or recycled flue gas and/ or air.

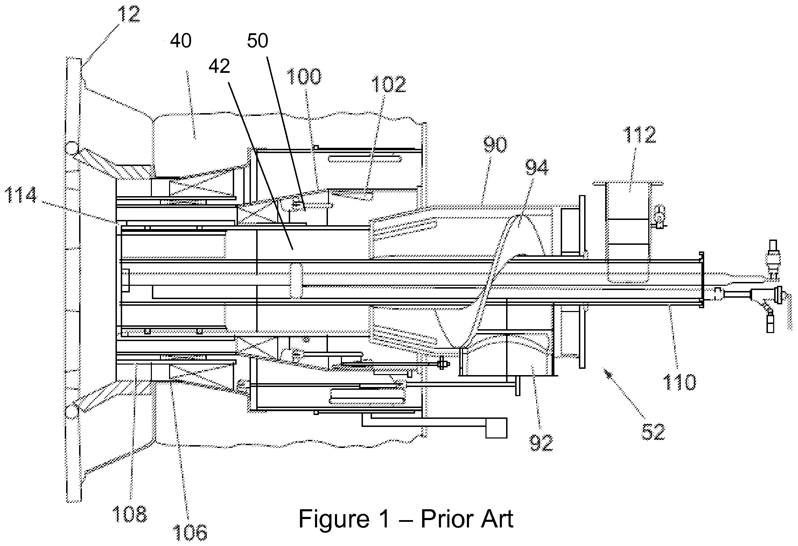

Figure 1 (prior art) shows one specific implementation of low NOx burner technology; it is known by those knowledgeable in this area that there are a number of variant low NOx burner designs available.

Implicit in the design of any low NOx burner is the presumption that there must be sufficient oxidant in the primary (transport) stream to support the early combustion of the solid fuel; a natural progression from the use of direct fired combustion systems is that the air flow required to convey the solid fuel from the pulverizing mill is also sufficient for the early combustion of that solid fuel. It has been shown that reducing the amount of air (oxidant) available in the early stages of combustion has a detrimental impact upon the stability of the flame and, at a certain level, the flame will extinguish, even though a sufficient quantity of air is supplied to the burner as a whole.
This has tended to discourage consideration of the use of indirect firing for low NOx burners.

US2009/0000532, which discloses the preamble of claim 1, describes a low-NOx burner suitable for firing the furnace of a steam generator which is equipped with a dense phase conveyance of the fuel. However, the arrangement requires burner redesign to provide for separate conveying of primary fuel and primary oxidant into the burner via concentric primary air and fuel conduits and to provide for mixing of the fuel and primary oxidant streams within the burner downstream of the burner entrance and towards the burner outlet by provision of swirl devices in the primary conduit. This leads to a more complex design of burner. Another indirectly fired burner is disclosed in DE1952150 A1. An arrangement which is simpler and/ or more immediately compatible with existing low-NOx burner designs is desirable.
According to the invention there is provided a combustion apparatus in accordance with the claims appended hereto.
Fundamentally, the burner of the invention is an indirectly fired burner in that the fuel feed line conveys pulverous fuel to the burner in a dense phase for mixing with a supply of comburant gas at the burner, rather than a direct firing system. The invention offers a capability of providing a low-NOx burner, which is suitable for firing the furnace of a steam generator, with a dense phase conveyance of fuel, without disadvantageously affecting the low-NOx combustion characteristic of the burner.

However, it can be contrasted with US2009/0000532, where the burner has separate primary fuel and primary oxidant tubes and where mixing of dense phase primary fuel and oxidant takes place within the burner towards the outlet/ combustion end by means of swirl devices specifically provided for such a purpose.

By contrast, in accordance with the present invention, mixing of the dense phase primary fuel and oxidant is effected upstream of the main body of the burner and in particular at or about the burner inlet and for example immediately upstream of the burner inlet by means of a suitable flow stream mixing device. In particular this is done in combination with a duct arrangement upstream of the burner, whereby a dense phase stream of solid pulverous fuel is introduced to a stream containing the oxidant (air or other oxygen containing gas) upstream of the mixing device, so as to create a mixture capable of sustaining a stable flame in a solid fuel burner after these two streams are mixed within the burner following their interaction with a suitable mixing device. The mixing device is conveniently a static mixing device but may additionally or alternatively include a variable mixing device.

The resultant mixture capable of sustaining a stable flame is conveyed along a primary conduit in essentially conventional manner to a burner outlet, for example letting into a combustion chamber in familiar manner, in the vicinity of which a combustion site is defined at which combustion of the fuel is supported during use.

The general design of the burner may thus otherwise be relatively conventional. In particular, conventional low NOx burner designs may be readily adapted in accordance with the principles of the invention. This is particularly advantageous in the case where the low NOx burner design to which the invention is to be applied already includes a suitable static or other mixing device (such as the scroll plate in the low NOx burner design given by way of example in figure 1) in the primary conduit at or about the burner inlet. In such cases, the existing mixing device may be used to complete the process of mixing the dense phase fuel stream and the primary comburant gas stream as it feeds into the primary conduit. Conveniently therefore, a suitable mixing device such as a suitable static mixing device is provided within the primary conduit in the vicinity of the burner inlet. Alternatively it is a relatively simple design matter to provide a suitable mixing device in the primary stream at or about the burner inlet.

In all cases, the invention is distinctly characterised in that fuel is supplied in dense phase but that mixing of the fuel and primary comburant gas stream is effected upstream of and/ or in the vicinity of the burner inlet, rather than within the burner and/ or towards the outlet, and that the primary conduit within the burner carries in use a fuel and oxidant mix capable of supporting combustion. This is effected by the combination of injection of fuel in dense phase to the supply conduit carrying oxidant upstream of the burner inlet and by provision of a suitable mixing device such as a static mixing device downstream thereof and for example at or about the burner inlet and for example immediately upstream of the burner inlet.

In the context of the art of the invention, the term "dense phase" will be readily understood by the person skilled in the art. It includes for example conveying flows of pulverous fuel and transport gas with pulverous fuel to transport gas mass ratio of at least 3 and for example at least 5, at pressures of for example 0.5 to 5 bar, and at flow speeds of for example 10 to 30 ms⁻¹ or more. It should be emphasised that these parameters are examples only. The skilled person will readily be able to determine whether a particular conveying flow constitutes a dense phase flow as it would be understood in the art.

In accordance with the invention a mixing device is provided in stream in the primary flow stream to facilitate mixing of the dense phase pulverous fuel stream and the primary comburant gas stream upstream of the burner or in the vicinity of the burner inlet. Conveniently the mixing device comprises a static mixing device.

A suitable static mixing device comprises a static formation located in the primary flow stream, and for example in the primary conduit at or towards a burner inlet end thereof, configured to effect at least a partial obstruction of flow of the primary flow stream. In a preferred case a static mixing device comprises a static formation configured to impart a swirling motion to the primary flow stream.

For example a static mixing device may comprise one or more bladed formations presenting a flow deflection surface at an angle to a primary flow direction of the stream, for example at an angle to an axial flow direction. A static mixing device may comprise one or more helical bladed formations. A static mixing device may comprise a scroll plate such as is familiar for example from the prior art illustration of figure 1.

Additionally, the supply conduit may be fluidly linked to the primary conduit at an angle thereto, for example such there is an angle between an axial flow direction in the supply conduit and an axial flow direction in the primary conduit. This produces a deviation in flow direction in the primary flow stream downstream of the fuel outlet and at the burner inlet which may therefore assist in mixing of the dense phase pulverous fuel stream and the primary comburant gas stream. A mixing device such as a static mixing device is conveniently located at or about this deviation in flow direction.

In the preferred case, the fuel feed line is provided with a fuel feed outlet into the supply conduit closely upstream of the mixing device. The mixing device may be provided closely upstream of the burner inlet and/ or within the primary conduit of the burner in the vicinity of the inlet such that mixing is effected before or about the burner inlet region and such that for at least a substantially major part of the burner length the primary conduit carries in use a mixed fuel and primary comburant gas supply.

The temperature of the mixture is below the devolatilisation initiation temperature of the solid fuel.

It is a particular advantage although not a requirement of the invention that it can be applied to low-NOx pulverized coal burners following general known design principles without major additional modification.

In a preferred case, the burner of the invention is a pulverized coal burner. The invention is suitable for pulverous fuel burners for pulverized bituminous coals and for dried pulverized lower rank coals such as brown coals/ lignites. The invention is particularly suited to application for pulverous fuel burners for dried pulverized lignites.

In a preferred case, the burner of the invention is a low-NOx burner. Known principles of low-NOx burner design may be embodied.

For example the burner may comprise one or more secondary and/ or one or more tertiary or higher order conduits comprising flow channels for the supply of further gases such as further comburant gases to the combustion site at the burner outlet. For example, as will be familiar, one or more secondary and/ or one or more tertiary or higher order conduits may be disposed annularly in concentric manner about a primary conduit.

For example the burner may comprise a core tube about which the primary conduit is annularly disposed. The core conduit may comprise a flow channel for the supply of further gases such as further comburant gases to the combustion site at the burner outlet and/ or may include an ignition lance for example coaxially arranged in the core tube.

Preferably, the combustion apparatus is adapted for oxyfuel firing. That is, the combustion apparatus comprises a comburant gas supply apparatus adapted to supply a comburant gas to at least one conduit of the burner having a reduced nitrogen content relative to air. Preferably the comburant gas supply apparatus is adapted to supply a comburant gas to at least one conduit of the burner that does not contain air. Preferably the comburant gas supply apparatus is adapted to supply a comburant gas to at least one conduit of the burner that is substantially free of nitrogen.

Optionally, the comburant gas supply apparatus may include a source of pure oxygen, such that the comburant gas supply apparatus is adapted to supply an oxidant mixture comprising pure oxygen and other gases to at least one conduit of the burner.

Optionally, the comburant gas supply apparatus may additionally be adapted to supply comburant air. The comburant gas supply apparatus may be adapted to switchably supply either air or the comburant gas having a reduced nitrogen content relative to air to at least one conduit of the burner.

Preferably the combustion apparatus includes a flue gas recirculation conduit. Preferably the flue gas recirculation conduit is fluidly connected in series or parallel to the comburant gas supply apparatus such that a comburant gas mixture including recycled flue gas may be supplied to at least one conduit of the burner.

Such a comburant gas supply apparatus facilitates control of the fuel/ oxidant stoichiometry within the burner.

The parameters that are understood to affect the ignition and stability of the flame include, for example, the following;
- the primary and secondary stream velocities
- secondary / primary velocity ratio
- the ignition zone stoichiometry
- the ignition zone temperature / heat availability
- the burner geometry, e.g. ratio of core air to primary air tubes or ratio of primary air to secondary air tubes

Overall stoichiometry, the ratio of the total oxygen supplied for combustion divided by the theoretical total oxygen required for complete combustion, and burner zone stoichiometry, the ratio of the total oxygen supplied to all (e.g. core, primary, secondary and tertiary) the burner streams for combustion divided by the theoretical total oxygen required for complete combustion, are common stoichiometry parameters assigned to control the performance of the burner in terms of combustion efficiency and NOx production.

However, in relation to ignition of the flame it is possible to derive to other stoichiometry parameters. One such parameter is the ignition zone stoichiometry, the ratio of the total oxygen supplied to the core and primary burner streams for combustion divided by the theoretical total oxygen required for complete combustion. A second parameter is the ignition zone volatile matter stoichiometry, the ratio of the total oxygen supplied to the core and primary burner streams for combustion divided by the theoretical total oxygen required for complete combustion of the volatile matter in the coal.

If the oxidant is air, then the stoichiometry parameters are directly related to the mass, or volume, flow of air since the concentration of oxygen in air is constant at 20.95 %v/v or 23.14 %w/w.

However, if the oxidant is a mixture of an inert gas (that could be nitrogen, carbon dioxide, moisture, argon, etc., or a mixture of these in, for example, flue gas) and oxygen, then the stoichiometry parameters are related to both the mass, or volume, flow of oxidant and the concentration of oxygen in oxidant. For this application the concentration of oxygen in oxidant is preferably in the range 10 %v/v to 35 %v/v.

It has been found that mixing the dense phase solid fuel stream containing insufficient oxidant to support combustion by itself, with a primary air (oxidant) stream to achieve the desired ignition zone stoichiometry and concentration of oxygen in oxidant allows the safe, stable, and efficient combustion of a solid fuel stream that is supplied via a dense phase conveying system. Significantly the arrangement tested allowed the primary air (oxidant) and solid fuel stream to replicate the typical conditions exiting the pulverizing mills and commonly applied to burners of this type.

It has been found that relatively small instantaneous variations in the fuel flow to a burner have a substantial impact upon the residual oxygen level after combustion (example: for a typical power station burner with ∼40MWt thermal input firing coal the coal flow is around 5 tonne/h; an instantaneous increase in the coal flow of just ∼200g reduces the exit oxygen level from 3%v/v to zero, with the localised impact being considerably greater in the early combustion region). Such variations can have a destabilising effect on the flame as the early combustion is temporarily starved of oxygen. It is therefore shown to be important that, in a dense phase combustion system, the amount of primary air (oxidant) supplied to the burner is sufficient to accommodate the effect of the fluctuations in solid fuel feed rate that arise from the dense phase feeding system.

It is well known by those familiar with the operation of pulverized solid fuel combustion systems that there is a risk of the fuel burning in an uncontrolled manner within the equipment should the temperature be too high. To ensure that such uncontrolled burning does not occur, it is necessary to maintain temperatures that are lower than the "devolatilisation initiation temperature", that is the temperature at which the volatile material in the coal starts to be released. This devolatilisation initiation temperature is dependant upon the solid fuel; for lignite coals it is typically around 250°C, for bituminous coals it is ranges between ∼300°C to -380°C, for low volatile & anthracitic coals it is around ∼400°C to -520°C, and for certain types of petroleum coke it is around ∼350°C to ∼380°C. Thus, in addition to ensuring that a desirable ignition zone stoichiometry is achieved, the mixing of the dense phase stream and the primary air (oxidant) stream must be such that the mixture temperature is lower than the devolatilisation initiation temperature by a reasonable margin.

Mixing of the dense phase primary fuel and oxidant is effected upstream of the main body of the burner and in particular at or about the burner inlet, by supplying a dense phase stream of solid pulverous fuel into a stream containing the oxidant and by interaction with a suitable flow stream mixing device. The mixing device is conveniently a static mixing device but may additionally or alternatively include a variable mixing device. Thus, fuel is supplied in dense phase but mixing of the fuel and primary oxidant is effected upstream of and/ or in the vicinity of the burner inlet, rather than within the burner towards the outlet.

In particular, the mixing device, for example the static mixing device, is used to effect at least a partial obstruction of flow of the primary flow stream of pulverous fuel in dense phase and comburant gas to facilitate mixing thereof. In a preferred case the mixing device is used to impart a swirling motion to the primary flow stream of pulverous fuel in dense phase and comburant gas to facilitate mixing thereof. Additionally, the primary flow stream may be caused to deviate in flow direction at the mixing device and/ or at the burner inlet to assist in mixing of the dense phase pulverous fuel stream and the primary comburant gas stream.
Preferably, the pulverous fuel burner is a pulverized coal burner, for example a burner for pulverized bituminous coal or dried pulverized lower rank coal. Consequently preferably the pulverous fuel is pulverized coal, for example pulverized bituminous coal or dried pulverized lower rank coal. Preferably, the pulverous fuel is dried pulverized lignite.
Preferably, the burner is operated in low-NOx operation, in particular in that the supply of comburant gas is split between supply of comburant gas mixed with fuel to a primary conduit and supply of comburant gas to one or more secondary and/ or one or more tertiary or higher order conduits. A method, which does not form part of the invention, is suitable for air and/ or oxyfuel firing and is particularly suitable for oxyfuel firing. Preferably the comburant gas is one or more of: air; oxygen; a comburant gas having a reduced nitrogen content relative to air; recycled flue gas. Suitable mixtures of the foregoing may be used to control the fuel/ oxidant stoichiometry within the burner.

In the particular case, the method of this aspect is a method of operation of a burner of the first aspect of the invention and preferred features of the method will be understood by analogy.

An embodiment of the present invention will now be described, by way of example only, with reference to the accompanying drawings, in which:
Figure 1 is a sectional side view of a prior art burner to which the principles according to the invention could be applied;
Figure 2 is a simplified diagrammatic view of a combustion apparatus according to the invention such as it might be applied for example to a burner of the type illustrated in Figure 1.

Figure 1 is a sectional side view of a prior art low-NOx burner 52 fitted to a boiler wall 12.

Each burner 52 has five co-axially arranged tubular partitions defining annular passages for one, or a mixture, of fuel, oxygen, flue gas, and air.

Each burner 52 has a primary tube 90 which is fluidly connected to the primary fuel input conduit 42. In the prior art the burner 52 is described for direct firing. The burner is adapted for air or oxyfuel firing. A mixture of pulverized coal fuel and comburant gas, for example air for air firing, or a mixture of recycled flue gas and oxygen for oxyfuel firing, is supplied to a scroll plate 94 of the primary tube 90 via a tangential connection 92.

Each burner 52 also has a secondary tube 100 which is fluidly connected to the secondary input conduit 50. Comburant gas, for example air for air firing, or a mixture of recycled flue gas and oxygen for oxyfuel firing, is supplied to apertures 102 provided in the secondary tube 100 from a wind box 40 surrounding the burner 52.

Each burner 52 includes two tertiary tubes 106, 108. Also, a core tube 110 is provided, which includes a radial connection 112. These tubes may be fluidly connected to one or both of the combustion gas supply means and the flue gas recirculation system, which is not shown on Figure 1.

In operation, fuel within the primary tube 90 is given an axial and a circumferential momentum by the scroll plate 94. The scroll plate is intended to impart this axial and circumferential momentum to fuel in a fuel gas mix which has already been mixed prior to transport to the burner.

The flow is discharged past a lip 114 as a vigorously eddying flow which ignites at the lip 114 defining an initial combustion region. Reducing conditions prevail within this region such that there is minimal oxidation of the nitrogen in the fuel. The amount of oxygen in the core tube 110 is also limited to maintain these conditions.

Flow from the secondary 100 and tertiary 106, 108 tubes forms an envelope around the initial combustion region so that combustion of the fuel is completed downstream under oxidising conditions.

Such a burner and the general principles it embodies for low-NOx combustion, will be familiar.

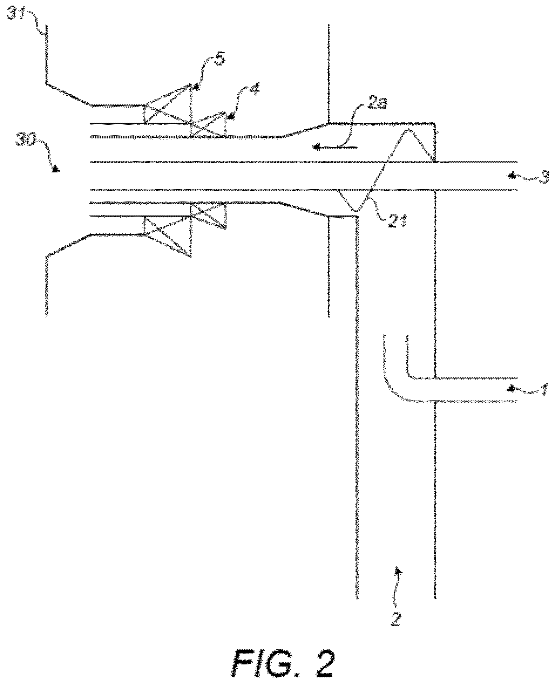

Figure 2 shows how the principles of the invention might be applied to a burner of the type illustrated in Figure 1.

A supply tube 1 carrying a concentrated stream of pulverous solid fuel and a small amount of transport gas in dense phase is introduced into a larger tube 2 carrying the primary oxidant to the burner. Figure 2 shows a typical arrangement for the dense phase solid fuel injection into the primary stream and its subsequent mixing at the burner entry.

In a typical "dense phase" suitable for application of the principles of the invention, the transport gas stream could be air, inert gas, or a gas mixture containing up to 21%v/v oxygen, including flue gas. Typically the mass ratio of solid fuel to gas would be of the order of 5:1.

A suitable primary oxidant stream for application of the principles of the invention could be air or a gas mixture, including flue gas, containing oxygen, for example air for air firing, or a mixture of recycled flue gas and oxygen for oxyfuel firing. The concentration of oxygen in the primary stream is preferably in the range 10 to 35%v/v.

Because mixing between two parallel streams is poor, especially when their velocities are similar, a suitable mixing device and preferably a static mixing device is introduced. Conveniently in this embodiment the scroll casting 21, shown at the solid fuel and primary oxidant entry to the burner, serves as a static mixing device. The scroll 21 provides an obstruction to the inlet flow, and imparts a swirling motion. In this embodiment there is also a 90° change in direction between an axial flow direction for the primary supply flow 2 and an axial flow direction for the primary flow within the burner 2a which further enhances the mixing of the solid fuel and primary oxidant.

Advantageously therefore in this embodiment a static mixing device is employed which was already present in the direct fired design. However, the invention encompasses additionally or alternatively the provision of specific to purpose static and/ or other mixing devices in the primary stream upstream of or at or about the inlet to the burner.

At the outlet of the scroll 21 the solid fuel and oxidant are well mixed in a controlled fashion, giving the desired solid fuel concentration distribution to promote stable combustion. The mixture forms a primary flow 2a through a primary tube to a burner outlet 30 in a furnace wall 31 in familiar manner.

It is a particular advantage of the invention that it can be applied to low-NOx pulverized coal burners following general known design principles without major additional modification. Thus, the remainder of the burner, as illustrated schematically, may include in any suitable combination those features of the prior art burner illustrated in figure 1.

For example the illustrated burner comprises secondary and tertiary conduits 4 and 5 for introduction of supplies of secondary and tertiary oxidant gas, for example air for air firing, or a mixture of recycled flue gas and oxygen for oxyfuel firing.
For example the illustrated burner comprises a core tube 3 about which the primary conduit is annularly disposed. The core tube may be used to supply further oxidant gases or may include an ignition lance for example coaxially arranged in the core tube.
The ignition zone stoichiometry at the outlet of a static mixing device in an embodiment of the invention would be preferably in the range 0.1 to 0.3 and for example about 0.2.
The benefit of the invention is that, by the use of a combination of a dense phase fuel inlet pipe and a suitable flow mixing device in the primary flow and in particular a suitable static mixing device, the process conditions (i.e. the solid concentration and ignition zone stoichiometry) may be modified to create conditions that favour the ignition of the solid fuel and thereby enhance the flame stability in the burner; this characteristic leads to improved operational flexibility of the low NOx burner by allowing it to be used over a wide range of load, and ensuring that flame stability is robust with respect to the instantaneous variations in solid fuel feed rate as observed in practical combustion systems. Additionally the mixture temperature is maintained at a level lower than the devolatilisation initiation temperature to ensure that uncontrolled burning does not occur within the combustion equipment hardware.
In accordance with the invention a solid fuel entry located immediately upstream of a mixer is thus used to deliver a controlled mixture of solid fuel and primary oxidant containing sufficient oxygen to sustain combustion (including when the fuel flow is subject to fluctuation), and at a temperature lower than the devolatilisation initiation temperature.

## Claims

1. A combustion apparatus comprising:
an indirectly fired burner having a burner inlet for receiving a supply of combustible pulverous fuel and a supply of comburant gas and a burner outlet (30) in the vicinity of which combustion of the fuel is supported during use;
at least a primary conduit defining a flow channel for conveying a mixture of fuel and primary comburant gas from the burner inlet to the burner outlet; a dense phase fuel feed line defining a flow channel (1) adapted to convey a pulverous combustible fuel in a dense phase; and
a supply conduit (2) fluidly connecting a comburant gas supply to the primary conduit and defining with the primary conduit a primary flow stream; **characterized in that**; the fuel feed line is provided with a fuel feed outlet into the supply conduit upstream of the burner inlet to supply pulverous combustible fuel in a dense phase;
and the primary flow stream is provided with a mixing device (21) downstream of the fuel feed outlet and at the fuel and primary comburant gas inlet to the burner.

2. A combustion apparatus in accordance with any preceding claim wherein the mixing device (21) comprises a static mixing device comprising a static formation located in the primary flow stream and configured to effect at least a partial obstruction of flow of the primary flow stream.

3. A combustion apparatus in accordance with claim 2 wherein the static mixing device (21) comprises a static formation configured to impart a swirling motion to the primary flow stream comprising one or more helical bladed formations presenting a flow deflection surface at an angle to a primary flow direction of the stream, for example at an angle to an axial flow direction.

4. A combustion apparatus in accordance with one of claims 2 to 3 wherein the static mixing device (21) comprises a scroll plate.

5. A combustion apparatus in accordance with any preceding claim wherein the fuel feed line is adapted to convey a pulverous combustible fuel in a dense phase with pulverous fuel to transport gas mass ratio of at least 3 at pressures of 0.5 to 5 bar and at flow speeds of at least 10 ms⁻¹.

6. A combustion apparatus in accordance with any preceding claim wherein the supply conduit (2) is fluidly linked to the primary conduit (2a) at an angle thereto, such that there is an angle between an axial flow direction in the supply conduit and an axial flow direction in the primary conduit.

7. A combustion apparatus in accordance with any preceding claim wherein the burner is a low-NOx pulverized coal burner.

8. A combustion apparatus in accordance with any preceding claim wherein the burner comprises one or more secondary (4) and/ or one or more tertiary (5) or higher order conduits comprising flow channels for the supply of further gases such as further comburant gases to the combustion site at the burner outlet and the one or more secondary and/ or one or more tertiary or higher order conduits are disposed annularly in concentric manner about a primary conduit.

9. A combustion apparatus in accordance with any preceding claim wherein the burner comprises a core tube (3) about which the primary conduit is annularly disposed.

10. A combustion apparatus in accordance with any preceding claim adapted for oxyfuel firing wherein the comburant gas supply apparatus includes a source of comburant gas having a reduced nitrogen content relative to air.

11. A combustion apparatus in accordance with claim 10 wherein the comburant gas supply apparatus is additionally adapted to supply comburant air and is adapted to switchably supply either air or the comburant gas having a reduced nitrogen content relative to air to at least one conduit of the burner.

12. A combustion apparatus in accordance with any preceding claim including a flue gas recirculation conduit fluidly connected in series or parallel to the comburant gas supply apparatus such that a comburant gas mixture including recycled flue gas may be supplied to at least one conduit of the burner.

## Patentansprüche

1. Eine Verbrennungsvorrichtung, beinhaltend:
einen indirekt angefeuerten Brenner, der einen Brennereinlass zum Aufnehmen einer Zufuhr von brennbarem pulverförmigem Brennstoff und einer Zufuhr von Verbrennungsgas und einen Brennerauslass (30), nahe dem eine Verbrennung des Brennstoffs während der Verwendung unterstützt wird, aufweist;
mindestens eine Primärleitung, die einen Fließkanal zur Übermittlung eines Gemischs aus Brennstoff und primärem Verbrennungsgas von dem Brennereinlass zu dem Brennerauslass definiert;
eine Brennstoffspeiseleitung dichter Phase, die einen Fließkanal (1) definiert, der angepasst ist, um einen pulverförmigen brennbaren Brennstoff in einer dichten Phase zu übermitteln; und
eine Zufuhrleitung (2), die eine Verbrennungsgaszufuhr fluidmäßig mit der Primärleitung verbindet und mit der Primärleitung einen primären Fließstrom definiert;
**dadurch gekennzeichnet, dass**
die Brennstoffspeiseleitung mit einem Brennstoffzufuhrauslass in die Zufuhrleitung stromaufwärts des Brennereinlasses versehen ist, um pulverförmigen brennbaren Brennstoff in einer dichten Phase zuzuführen;
und der primäre Fließstrom mit einer Mischvorrichtung (21) stromabwärts des Brennstoffzufuhrauslasses und an dem Einlass für Brennstoff und primäres Verbrennungsgas zu dem Brenner versehen ist.

2. Verbrennungsvorrichtung gemäß einem vorhergehenden Anspruch, wobei die Mischvorrichtung (21) eine statische Mischvorrichtung, beinhaltend eine statische Formation, die in dem primären Fließstrom gelegen ist und konfiguriert ist, um zumindest eine teilweise Einschränkung des Flusses des primären Fließstroms zu bewirken, beinhaltet.

3. Verbrennungsvorrichtung gemäß Anspruch 2, wobei die statische Mischvorrichtung (21) eine statische Formation beinhaltet, die konfiguriert ist, um dem primären Fließstrom eine Wirbelbewegung zu vermitteln, beinhaltend eine oder mehrere Formationen mit spiralförmigen Klingen, die in einem Winkel zu einer primären Fließrichtung des Stroms, zum Beispiel in einem Winkel zu einer axialen Fließrichtung, eine Oberfläche zur Strömungsumlenkung darstellen.

4. Verbrennungsvorrichtung gemäß einem der Ansprüche 2 bis 3, wobei die statische Mischvorrichtung (21) eine Rollplatte beinhaltet.

5. Verbrennungsvorrichtung gemäß einem der vorhergehenden Ansprüche, wobei die Brennstoffspeiseleitung angepasst ist, um einen pulverförmigen brennbaren Brennstoff in einer dichten Phase mit pulverförmigem Brennstoff zu übermitteln, um das Gas-Masse-Verhältnis von mindestens 3 bei Drücken von 0,5 bis 5 bar und bei Fließgeschwindigkeiten von mindestens 10 ms⁻¹ zu transportieren.

6. Verbrennungsvorrichtung gemäß einem der vorhergehenden Ansprüche, wobei die Zufuhrleitung (2) fluidmäßig mit der Primärleitung (2a) in einem Winkel zu dieser verknüpft ist, so dass ein Winkel zwischen einer axialen Fließrichtung in der Zufuhrleitung und einer axialen Fließrichtung in der Primärleitung besteht.

7. Verbrennungsvorrichtung gemäß einem der vorhergehenden Ansprüche, wobei der Brenner ein Niedrig-NOx-Kohlenstaubbrenner ist.

8. Verbrennungsvorrichtung gemäß einem der vorhergehenden Ansprüche, wobei der Brenner eine oder mehrere Leitungen sekundärer Ordnung (4) und/oder eine oder mehrere Leitungen tertiärer (5) oder höherer Ordnung, beinhaltend Fließkanäle für die Zufuhr weiterer Gase wie etwa weiterer Verbrennungsgase zu der Verbrennungsstelle an dem Brennerauslass, beinhaltet und die eine oder mehreren Leitungen sekundärer Ordnung und/oder eine oder mehrere Leitungen tertiärer oder höherer Ordnung auf konzentrische Weise ringförmig um eine Primärleitung angeordnet sind.

9. Verbrennungsvorrichtung gemäß einem der vorhergehenden Ansprüche, wobei der Brenner ein Kernrohr (3) beinhaltet, um das die Primärleitung ringförmig angeordnet ist.

10. Verbrennungsvorrichtung gemäß einem der vorhergehenden Ansprüche, die zur Oxyfuel-Feuerung angepasst ist, wobei die Verbrennungsgaszufuhrvorrichtung eine Verbrennungsgasquelle, die relativ zu Luft einen reduzierten Stickstoffgehalt aufweist, umfasst.

11. Verbrennungsvorrichtung gemäß Anspruch 10, wobei die Verbrennungsgaszufuhrvorrichtung zusätzlich angepasst ist, um Verbrennungsluft zu liefern, und angepasst ist, um umschaltbar entweder Luft oder das Verbrennungsgas mit einem relativ zu Luft reduzierten Stickstoffgehalt an mindestens eine Leitung des Brenners zu liefern.

12. Verbrennungsvorrichtung gemäß einem der vorhergehenden Ansprüche, die eine Abgasrezirkulationsleitung umfasst, die in Reihe oder parallel fluidmäßig so mit der Verbrennungsgaszufuhrvorrichtung verbunden ist, dass ein Verbrennungsgasgemisch einschließlich rezirkuliertem Abgas an mindestens eine Leitung des Brenners geliefert werden kann.

## Revendications

1. Un appareil de combustion comprenant :
un brûleur à chauffe indirecte ayant une entrée de brûleur destinée à recevoir un apport de combustible pulvérulent comburable et un apport de gaz comburant et une sortie de brûleur (30) au voisinage de laquelle la combustion du combustible est supportée pendant l'utilisation ;
au moins un conduit primaire définissant un canal d'écoulement pour acheminer un mélange de combustible et de gaz comburant primaire de l'entrée de brûleur à la sortie de brûleur ;
une conduite d'alimentation en combustible en phase dense définissant un canal d'écoulement (1) conçue pour acheminer un combustible comburable pulvérulent dans une phase dense ; et
un conduit d'apport (2) raccordant fluidiquement un apport de gaz comburant au conduit primaire et définissant avec le conduit primaire un flux d'écoulement primaire ;
**caractérisé en ce que**
la conduite d'alimentation en combustible est pourvue d'une sortie d'alimentation en combustible débouchant dans le conduit d'apport en amont de l'entrée de brûleur afin d'apporter du combustible comburable pulvérulent dans une phase dense ;
et le flux d'écoulement primaire est pourvu d'un dispositif de mélange (21) en aval de la sortie d'alimentation en combustible et au niveau de l'entrée de combustible et gaz comburant primaire vers le brûleur.

2. Un appareil de combustion conformément à n'importe quelle revendication précédente dans lequel le dispositif de mélange (21) comprend un dispositif de mélange statique comprenant une formation statique située dans le flux d'écoulement primaire et configurée afin d'effectuer au moins une obstruction partielle de l'écoulement du flux d'écoulement primaire.

3. Un appareil de combustion conformément à la revendication 2 dans lequel le dispositif de mélange statique (21) comprend une formation statique configurée afin de conférer un mouvement tourbillonnaire au flux d'écoulement primaire comprenant une ou plusieurs formations à pales hélicoïdales présentant une surface de déflexion d'écoulement à un angle par rapport à une direction d'écoulement primaire du flux, par exemple à un angle par rapport à une direction d'écoulement axiale.

4. Un appareil de combustion conformément à l'une des revendications 2 à 3 dans lequel le dispositif de mélange statique (21) comprend une plaque en spirale.

5. Un appareil de combustion conformément à n'importe quelle revendication précédente dans lequel la conduite d'alimentation en combustible est conçue pour acheminer un combustible comburable pulvérulent dans une phase dense avec un rapport massique de combustible pulvérulent à gaz de transport d'au moins 3 à des pressions de 0,5 à 5 bar et à des vitesses d'écoulement d'au moins 10 ms⁻¹.

6. Un appareil de combustion conformément à n'importe quelle revendication précédente dans lequel le conduit d'apport (2) est relié fluidiquement au conduit primaire (2a) à un angle par rapport à celui-ci, de telle sorte qu'il y ait un angle entre une direction d'écoulement axiale dans le conduit d'apport et une direction d'écoulement axiale dans le conduit primaire.

7. Un appareil de combustion conformément à n'importe quelle revendication précédente dans lequel le brûleur est un brûleur à charbon pulvérisé à faible teneur en NOx.

8. Un appareil de combustion conformément à n'importe quelle revendication précédente dans lequel le brûleur comprend un ou plusieurs conduits secondaires (4) et/ou un ou plusieurs conduits tertiaires (5) ou d'ordre supérieur comprenant des canaux d'écoulement pour l'apport de gaz supplémentaires tels que des gaz comburants supplémentaires jusqu'au site de combustion au niveau de la sortie de brûleur et ces un ou plusieurs conduits secondaires et/ou un ou plusieurs conduits tertiaires ou d'ordre supérieur sont disposés annulairement de manière concentrique autour d'un conduit primaire.

9. Un appareil de combustion conformément à n'importe quelle revendication précédente dans lequel le brûleur comprend un tube central (3) autour duquel le conduit primaire est disposé annulairement.

10. Un appareil de combustion conformément à n'importe quelle revendication précédente conçu pour la chauffe oxycombustible dans lequel l'appareil d'apport de gaz comburant inclut une source de gaz comburant ayant une teneur en azote réduite relativement à l'air.

11. Un appareil de combustion conformément à la revendication 10 dans lequel l'appareil d'apport de gaz comburant est en outre conçu pour apporter de l'air comburant et est conçu pour apporter de manière commutable soit de l'air, soit le gaz comburant ayant une teneur en azote réduite relativement à l'air jusqu'à au moins un conduit du brûleur.

12. Un appareil de combustion conformément à n'importe quelle revendication précédente incluant un conduit de recirculation de gaz de carneau raccordé fluidiquement en série ou en parallèle à l'appareil d'apport de gaz comburant de telle sorte qu'un mélange de gaz comburant incluant du gaz de carneau recyclé puisse être apporté jusqu'à au moins un conduit du brûleur.
